# EUROPÄISCHE PATENTANMELDUNG

(11) **EP 2 039 461 A2**
(43) Veröffentlichungstag der Anmeldung: **25.03.2009**
(21) Anmeldenummer: 08164196.1
(22) Anmeldetag: 12.09.2008
(51) Int. Cl.: B23P 21/00, B23P 19/00, B23P 19/04

(54) **Montageanlage mit einem Werkstückeinlauf und Verfahren zum Montieren und/oder Demontieren von Werkstücken**

(30) Priorität: 24.09.2007 DE 102007045689; 11.01.2008 DE 102008004032
(71) Anmelder: Gehmeyr, Manfred, 93105 Tegernheim (DE); Held, Heinz, 93047 Regensburg (DE)
(72) Erfinder: Gehmeyr, Manfred, 93105, Tegernheim (DE); Held, Heinz, 93047, Regensburg (DE)
(74) Vertreter: Hannke, Christian

(57) **Zusammenfassung**

Um die Fehlerquote bei einer Montage und/oder Demontage an einer Montageanlage zu reduzieren, schlägt die Erfindung eine Montageanlage mit einem Werkstückeinlauf, mit einem Werkstückauslauf und mit handgeführten, elektrisch betriebenen Werkzeugen vor, mittels welcher eine Vielzahl an verschiedenen Montage- und/oder Demontagearten durchführbar ist, wobei sich die Montageanlage durch Mittel zum Entsperren und/oder Sperren der handgeführten, elektrisch betriebenen Werkzeuge auszeichnet.

## Beschreibung

Die Erfindung betrifft einerseits eine Montageanlage mit einem Werkstückeinlauf, mit einem Werkstückauslauf und mit handgeführten, elektrisch betriebenen Werkzeugen, mittels welcher eine Vielzahl an verschiedenen Montage- und/oder Demontagearten durchführbar ist. Andererseits betrifft die Erfindung ein Verfahren zum Montieren und/oder Demontieren von Werkstücken mit handgeführten, elektrisch betriebenen Werkzeugen, bei welchem Werkstücke und/oder Werkstückträger an einer Montageanlage bereit gestellt werden.

Montageanlagen zum Montieren, aber auch zum Demontieren, von Werkstücken sind in der Industrie insbesondere in der Serienproduktion gut bekannt und werden vielfältig eingesetzt, da sie die Montage von Werkstücken erheblich erleichtern. Oftmals arbeiten die Montageanlagen hierbei vollautomatisch. Jedoch kann es bei vielen Montagen erforderlich sein, dass einzelne Montageschritte nicht automatisch sondern manuell durchgeführt werden müssen. Insbesondere bei diesen manuell auszuführenden Montageschritten kommt es immer wieder zu Montagefehlern, die zu fehlerhaften Produkten führen können.

Es ist Aufgabe vorliegender Erfindung Montageanlagen dahin gehend weiter zu entwickeln, dass die Gefahr von Montagefehlern verringert wird.

Die Aufgabe der Erfindung wird von einer Montageanlage mit einem Werkstückeinlauf, mit einem Werkstückauslauf und mit handgeführten, elektrisch betriebenen Werkzeugen gelöst, mittels welcher eine Vielzahl an verschiedenen Montage- und Demontagearten durchführbar ist, und welche sich darüber hinaus durch Mittel zum Entsperren und/oder Sperren der handgeführten, elektrisch betriebenen Werkzeuge auszeichnet.

Dadurch, dass ein handgeführtes, elektrisch betriebenes Werkzeug beispielsweise nur dann entsperrt und damit einsatzbereit gemacht wird, wenn es für einen Montageschritt benötigt wird, kann die Fehlerquote bei einer Montage wesentlich verringert werden. Dies ist insbesondere dann vorteilhaft, wenn es für einen Montageerfolgt unabdingbar ist, dass eine vorgegebene Montagereihenfolge einzelner Komponenten, wie beispielsweise Schrauben, zwingend eingehalten werden muss.

Unter dem Begriff "Montageanlage" wird jegliche Montageeinrichtung, Montagevorrichtung und/oder Montagestraße verstanden, mittels welcher Montageschritte an einem Werkstück, insbesondere auch halbautomatisiert, durchgeführt werden können. Impliziert ist in diesem Begriff auch eine Demontageanlage, mittels welcher Produkte demontiert werden können, auch wenn dies im Hinblick auf nachfolgend erläuterte Merkmale nicht explizit erwähnt sein sollte.

Der Begriff "Werkstückeinlauf" beschreibt hierbei einen Bereich der Montagsanlage, an welchem ein Werkstück an der Montageanlage für einen nachfolgenden Montagevorgang bereitgestellt werden kann. In einem einfachen Fall kann der Werkstückeinlauf ein Montagetisch selbst sein.

In diesem Zusammenhang beschreibt der Begriff "Werkstückauslauf" einen Bereich der Montageanlage, in welchem ein bereits fertig montiertes Werkstück für eine weitere Verwendung bereitgestellt werden kann. In einem einfachen Fall kann der Werkstückauslauf ebenfalls der Montagetisch selbst sein.

Bei den "handgeführten, elektrisch betriebenen Werkzeugen" kann es sich sowohl um kabelgebundene als auch um kabellose Maschinen handeln. Hinsichtlich einer hohen Einsatzmobilität werden vorliegend bevorzugt kabellose, akkubetriebene Maschinen eingesetzt, wie beispielsweise Akku-Schrauber zum schnellen manuellen Montieren von Schrauben an einem Werkstück.

Eine bevorzugte Ausführungsvariante sieht vor, dass die handgeführten, elektrisch betriebenen Werkzeuge einen Akku-Schrauber umfassen.

Es versteht sich, dass die Montageanlage neben den handgeführten Werkzeugen auch maschinell geführte Werkzeuge umfassen kann. Diese können beispielsweise mittels eines Roboterarms der Montageanlage geführt sein.

Die "Mittel zum Sperren bzw. Entsperren" der handgeführten, elektrisch betriebenen Werkzeuge sind bevorzugt automatisiert schaltbar. Beispielsweise werden sie zentral von einer geeigneten Steuereinrichtung der Montageanlage hinsichtlich eines vorgegebenen Montageplans bereitgestellt.

In diesem Zusammenhang wird die Erfindung auch von einem Verfahren zum Montieren und/oder Demontieren von Werkstücken mit handgeführten, elektrisch betriebenen Werkzeugen gelöst, bei welchem Werkstücke und/der Werkstückträger an der Montageanlage bereit gestellt werden, bei welchem beim Einlauf der Werkstücke und/oder der Werkstückträger in die Montageanlage Montage- und/oder Demontageinformationen zu den Werkstücken von dezentral anordenbaren Speichereinrichtungen in eine Steuerungseinrichtung eingelesen werden, anhand derer ein Montage- und/oder Demontageplan aufgerufen werden kann, mittels welcher die Steuereinrichtung die Montageanlage in einen Montagemodus oder Demontagemodus versetzt und mittels welcher an der Montageanlage die handgeführten, elektrisch betriebenen Werkzeuge hinsichtlich einer Verwendung entsperrt oder gesperrt werden.

Insbesondere durch das Einlesen der entsprechenden Montage- und/oder Demontageinformationen ist betriebssicher gewährleistet, dass an der Montageanlage zu jedem Werkstück die jeweils aktuellen Montageinformationen unverwechselbar vorliegen. Werden diese Informationen an die Steuereinrichtung der Montageanlage übermittelt, können alle relevanten Montagemittel und Montageschritte betriebssicher gehandhabt werden. Erst nach einer erfolgreichen Übermittelung wird entweder ein Montagemodus oder ein Demontagemodus freigeschaltet, so dass auch erst dann mit den jeweiligen Montagearbeiten begonnen werden kann.

Um solche Montage- und/oder Demontageinformationen einlesen zu können, ist es von Vorteil, wenn die Montageanlage eine drahtlose Lese-/Schreibeinrichtung zum Lesen von dezentral gespeicherten Montage- und/oder Demontageinformationen und/oder zum Schreiben von Montage- und/oder Demontageinformationen in einen dezentral anordenbaren Informationsspeicher aufweist.

Derartige Lese-/Schreibeinrichtungen, beispielsweise zum Lesen und Schreiben von Informationen hinsichtlich eines RFID-Transponders, sind aus dem Stand der Technik gut bekannt, so dass auf eine explizite Erläuterung vorliegend nicht weiter eingegangen wird. Mit den Lese-/Schreibeinrichtungen können nicht nur Informationen von den dezentral anordenbaren Informationsspeichern gelesen werden, sondern bei Bedarf auch wichtige Informationen darauf geschrieben werden, die für spätere Arbeitsabläufe von Bedeutung sein können.

Eine bevorzugte Verfahrensvariante sieht vor, dass die handgeführten, elektrisch betriebenen Werkzeuge in der Reihenfolge ihres Montage- oder Demontageeinsatzes entsperrt oder gesperrt werden. Hierdurch ist ein unverwechselbarer Einsatz der handgeführten, elektrisch betriebenen Werkzeuge möglich.

Die dezentral anordenbaren Speichereinrichtungen können besonders betriebssicher einem Werkstück zugeordnet werden, wenn die Speichereinrichtungen in bzw. an einem Werkstückträger angeordnet sind, in welchem ein Werkstück zur Montage zumindest an dem Werkstückeinlauf der Montageanlage bereit gestellt ist. Hierdurch verbleibt eine Speichereinrichtung solange an einem Werkstück, bis dieses aus dem Werkstückträger heraus genommen wird, etwa am Ende eines Montagezyklus.

Zum Realisieren der dezentral anordenbaren Speichereinrichtungen können insbesondere RFID-Transponder zum Einsatz kommen. Aber auch andere Datenträger können hierbei verwendet werden.

Die Werkstückträger können in einem einfachen Fall lediglich Kisten darstellen, in welchen die Werkstücke aufbewahrbar gelagert sind. Besonders geeignet sind hierbei jedoch Werkzeugträger, die eine passgenaue Einlegeform, etwa eine Silikongießform, umfassen, da die Werkstücke hierin bereits ausgerichtet zur Montage angeliefert werden können.

Für eine betriebssichere Übermittelung der Informationen ist es vorteilhaft, wenn die Montageanlage über eine drahtlose Kommunikationseinrichtung für die Kommunikation zwischen den handgeführten, elektrisch betriebenen Werkzeugen und der Steuereinrichtung der Montageanlage verfügt.

Beispielsweise umfasst die drahtlose Kommunikationseinrichtung eine Bluetooth-Sendestation, deren Sende- und Empfangseinrichtungen an den entsprechenden Komponenten der Montageanlage angeordnet sein und/oder mit ihnen in geeigneter Weise in Wirkkontakt stehen können. Gegebenenfalls werden mittels der Bluetooth-Sendestation auch Daten zu einem Akkuladezustand eines Akku-Schraubers an die Steuereinrichtung übermittelt, um einem Monteur die verbleibende Leistung eines im Einsatz befindlichen anzeigen zu können.

Um beispielsweise eine Prüfung einer erfolgten Schraubenmontage online mittels der Steuereinrichtung vornehmen zu können, ist es vorteilhaft, wenn die Montageanlage Mittel zum vorzugsweise drahtlosen Übertragen von Anzugsdrehmomenten hinsichtlich einer erfolgten Schraubenmontage aufweist. Hierzu ist idealerweise jedes der handgeführten, elektrisch betriebenen Werkzeuge mit geeigneten Sensoren ausgestattet, die insbesondere ein erforderliches Anzugsdrehmoment messen können.

Werden entsprechende Daten an die Steuereinrichtung übermittelt, können diese dort ausgewertet werden. Ist ein erforderliches Drehmoment erreicht, kann die Steuereinrichtung einen nächsten Montageschritt freigeben, indem sie ein handgeführtes, elektrisch betriebenes Werkzeug für eine weitere Schraubenmontage entsperrt lässt oder ein neues handgeführtes, elektrisch betriebenes Montagewerkzeug freischaltet.

Eine entsprechende Auswerteeinheit für insbesondere das Auswerten eines Anzugsdrehmomentes kann entweder in der Steuereinrichtung integriert sein oder als eine zusätzliche Komponente der Montageanlage vorgesehen sein. Die Auswerteeinheit kann sowohl als Hardware als auch als Software ausgeführt sein.

Mittels der Steuereinrichtung und/oder der Auswerteeinheit kann auch eine automatisierte Protokollierung etwa einer ordnungsgemäßen Verschraubung vorgenommen werden. In einem entsprechenden Protokoll können Informationen zu einem Montagedatum, einer Montageuhrzeit usw. enthalten und dauerhaft dokumentiert sein.

Weist die Montageanlage eine Supporteinrichtung für Montagematerial, insbesondere für Montageschrauben, auf, kann eine Montage eines Werkstückes weiter vereinfacht werden. Beispielsweise kann mittels der Supporteinrichtung zu jedem handgeführten, elektrisch betriebenen Montagewerkzeug das richtige Montagematerial bereitgestellt werden.

Besonders vorteilhaft ist es, wenn die Supporteinrichtung eine Pick-By-Light-Armatur für Montagematerialbehälter umfasst. Indem zu jedem Montageschritt beispielsweise der Schraubenbehälter mit den erforderlichen Montageschrauben beleuchtet wird, kann die Gefahr von Montagefehlern weiter reduziert werden. Die Pick-By-Light-Armatur ist besonders im Hinblick darauf vorteilhaft, wenn die Montageanlage für mehrere Montagearten konzeptioniert ist, da durch ein zielgerichtetes Beleuchten eine sichere Bestimmung des Montagematerials für jede Montageart gewährleistet werden kann.

Insbesondere im Zusammenhang mit dem gezielten Freischalten eines Werkzeuges kann hierbei eine besonders hohe Montagesicherheit erreicht werden.

Bei einer diesbezüglichen Verfahrensvarianten kann vorteilhafter Weise vorgesehen sein, dass ein Montageort einer zu montierenden Schraube und/oder die zu montierende Schraube gekennzeichnet werden. Neben dem bereits erläuterten Beleuchten von Schrauben, ist es ebenfalls vorteilhaft, wenn der Montageort an einem Werkstück beleuchtet wird. So erkennt ein Monteur sofort und unmissverständlich, an welches Gewinde die präsentierte Montageschraube eingesetzt werden muss.

Eine weitere Erhöhung der Montagesicherheit kann erzielt werden, indem die Montageanlage eine Anzeigeeinrichtung zum Visualisieren eines Montage- und/oder Demontageplans aufweist. Neben den bereits erläuterten Montagehilfen, wie etwa das zielgenaue Entsperren oder Sperren von handgeführten, elektrisch betriebenen Werkzeugen und/oder das zielgenaue Beleuchten von Montagematerial, kann die Fehlerquote weiter reduziert werden, wenn der Montageplan und/oder korrespondierende Arbeitsanweisungen an einem Bildschirm zusätzlich angezeigt werden.

Um mehrere an der Montageanlage verwendete Akkumulatoren immer betriebsbereit halten zu können, ist es vorteilhaft, wenn die Montageanlage eine Ladestation für mehr als zwei, vorzugsweise vier, Akkumulatoren der handgeführten, elektrisch betriebenen Werkzeuge aufweist.

Um derartige Akkumulatoren, beispielsweise von entsprechenden Akku-Schraubern, immer mit Energie versorgen zu können, bedarf es zumindest einer Ladestation an der Montageanlage. Vorzugsweise wird eine vierfache Ladestation verwendet, bei welcher es mittels eines Fuzzy-Control-Ladeverfahrens problemlos möglich ist, beispielsweise 1,7 Ah NiCd-Akkumulatoren an jedem der vier Ladeschächte der Ladestation in ca. 15 Minuten vollständig laden zu können.

Um beispielsweise für nachgeschaltete weitere Arbeitsschritte Informationen über den bisherigen Montageablauf an jedem Werkstück vorliegen haben zu können, ist es hinsichtlich eines weiteren Verfahrensschrittes vorteilhaft, wenn nach einer erfolgten Montage oder Demontage entsprechende Arbeitsinformationen auf den dezentral anordenbaren Speichereinrichtungen geschrieben und gespeichert werden.

Vorteilhaft wird jede oder einzelne Handbewegung(en), die zur Entnahme einzelner Werkstücke aus Behältern dient, um diese zu montieren, überwacht und gespeichert, um beispielsweise den nächsten Arbeitsschritt durch die Anlage freizugeben. Eine derartige Überwachung kann beispielsweise mittels Lichtschrankeneinrichtungen, Induktionseinrichtungen oder dergleichen Einrichtung erfolgen, indem eine Handbewegung diese Einrichtung(en) elektronisch und/oder mechanisch auslöst.

Weitere Vorteile, Ziele und Eigenschaften vorliegender Erfindung werden anhand nachfolgender Beschreibung anliegender Zeichnung erläutert, in welcher beispielhaft eine Montageanlage und ein möglicher Verfahrensablauf an der Montageanlage dargestellt sind.

### Es zeigen:

- Figur 1: schematisch eine Montageanlage zum Montieren von Schrauben an einem Werkstück, und
- Figur 2: schematisch einen Verfahrensablauf zu der Montageanlage aus der Figur 1.

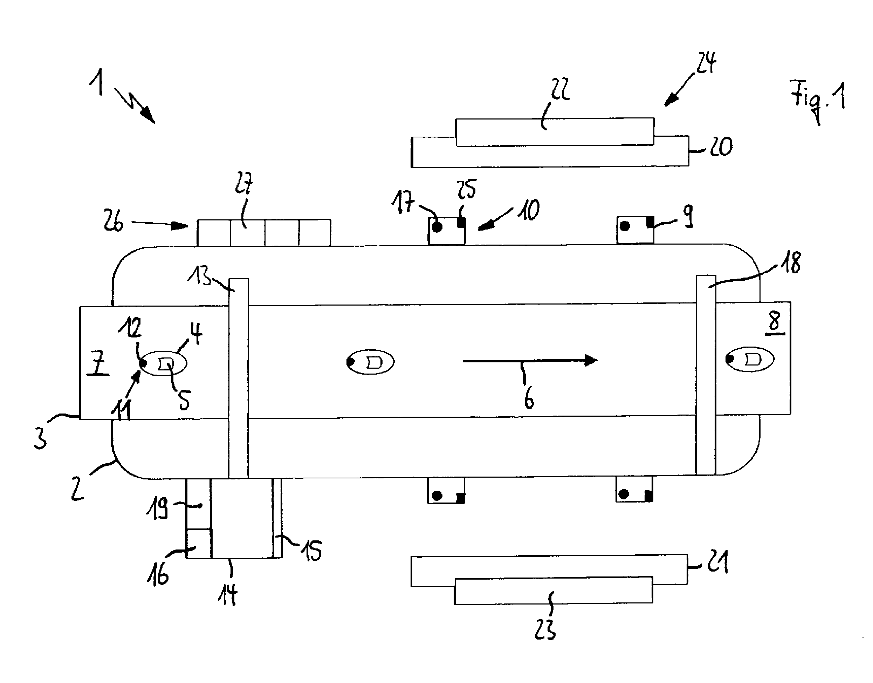

Die in der Figur 1 gezeigte Montageanlage 1 umfasst ein Gestell 2 mit einem Werkstücksupport 3, mittels welchem in Werkstückträgern 4 (nur exemplarisch beziffert) passgenau eingelegte Werkstücke 5 (nur exemplarisch beziffert) durch die Montageanlage 1 in Transportrichtung 6 transportiert werden. Die bestückten Werkstückträger 4 werden an einem Werkstückeinlauf 7 der Montageanlage 1 zugeführt und nach erfolgter Montage an einem Werkstückauslauf 8, beispielsweise zum Verpacken, am Ende des Werkstücksupports 3 bereit gestellt.

Mittels der Montageanlage 1 können sowohl eine Vielzahl an unterschiedlichsten Montagearten als auch eine Vielzahl an unterschiedlichsten Demontagearten durchgeführt werden, so dass die vorliegende Montageanlage 1 sehr vielseitig und universell einsetzbar ist.

Für Montagearbeiten umfasst die Montageanlage 1 insgesamt vier handgeführte, elektrisch betriebene Werkzeuge 9 (nur exemplarisch beziffert). Um insbesondere Schraubenmontagen schnell und zuverlässig vornehmen zu können, weist die Montageanlage 1 in diesem Ausführungsbeispiel als handgeführte, elektrisch betriebene Werkzeuge 9 vier handgeführte Akku-Schrauber 10 (nur exemplarisch beziffert) auf.

Damit einem Monteur oder mehreren Monteuren beispielsweise ein Montageplan eines zu montierenden Werkstückes 5 angezeigt werden kann, ist einerseits jeder der Werkstückträger 4 mit einem RFID-Transponder 11 ausgestattet, der hier als dezentrale Speichereinrichtung 12 eingesetzt wird. Auf dem RFID-Transponder 11 können in bekannter Weise Informationen zu dem Werkstück 5, insbesondere zu dessen Montageverlauf, gespeichert sein. Andererseits verfügt die Montaganlage 1 über eine Leseeinrichtung 13, mittels welcher jeder der RFID-Transponder 11 bereits im Bereich des Werkstückeinlaufs 7 ausgelesen werden kann. Die ausgelesenen Informationen werden an eine Steuereinrichtung 14 der Montageanlage 1 übermittelt und können dort bearbeitet bzw. weitergeleitet werden.

Mittels der Steuereinrichtung 14 kann nicht nur ein Bereitstellen der Werkstückträger 4, der zu montierenden Werkstücke 5, der erforderlichen Werkzeuge 9 und/oder weiterer Montagematerialien gesteuert werden, sondern mittels der Steuereinrichtung 14 kann die gesamte Montageanlage 1 und hieran durchgeführte Abläufe geregelt werden.

Insbesondere umfasst die Steuereinrichtung 14 auch einen Bildschirm 15, an welchem den Monteuren beispielsweise der Montageplan zu den auf dem Werkstücksupport 3 befindlichen Werkstücken 5 angezeigt wird.

Somit handelt es sich bei der Steuereinrichtung 14 im Wesentlichen um das Herzstück der Montageanlage 1, da mit ihr die Steuerung und Regelung der Montageanlage 1 kontrolliert und insbesondere gleichzeitig die Visualisierung von Arbeitsanweisungen übernommen werden kann.

Nur wenn eingelesene Informationen zu den Werkstücken 5 auf dem Werkstücksupport 3 an der Steuereinrichtung 14 vorliegen, kann die Montageanlage 1 in einen Montagemodus oder in einen Demontagemodus umschalten.

An der Steuereinrichtung 14 ist des Weiteren eine drahtlose Kommunikationseinrichtung 16 vorgesehen, mittels welcher die Steuereinrichtung 14 insbesondere mit den vorhandenen handgeführten, elektrisch betriebenen Werkzeugen 9 kommunizieren kann. Hierzu umfasst jedes der handgeführten, elektrisch betriebenen Werkzeuge 9 eine Sende- und Empfangseinheit 17 (hier nur exemplarisch beziffert). Sowohl die Kommunikationseinrichtung 16 als auch die Sende- und Empfangseinheiten 17 der Akku-Schrauber 10 basieren in diesem Ausführungsbeispiel auf einer Bluetooth-Technologie, mittels welcher die drahtlose Kommunikation dieser beteiligten und gegebenenfalls weiterer Montageanlagenkomponenten untereinander aufrecht gehalten wird.

Ebenfalls eingebunden in die drahtlose Kommunikation ist eine Schreibeinheit 18 im Bereich des Werkstückauslaufes 8. Die Schreibeinheit 18 dient am Ende einer erfolgreichen Montage dazu, in den RFID-Transponder 11 eines Werkstückträgeres 4 Montageinformationen einzuschreiben, die später gegebenenfalls noch Verwendung finden können. Solche Montageinformationen umfassen beispielsweise Angaben zu dem Montagedatum, dem Monteur bzw. eine Überwachungsprotokoll mit Drehmomentangaben zu den verbauten Schrauben an einem Werkstück 5.

Im Übrigen kann ein solches Überwachungsprotokoll kumulativ oder alternativ auch in der Steuereinrichtung 14 gespeichert sein.

Ein erfindungswesentliches Merkmal der vorliegenden Montageanlage 1 ist darin zu sehen, dass an der Montageanlage 1 Mittel zum Entsperren und/oder Sperren 19 der handgeführten, elektrisch betriebenen Werkzeuge 9 vorhanden sind. Insbesondere hiermit wird eine Montage besonders betriebssicher und damit fehlerunanfällig, da es durch die Mittel zum Entsperren und/oder Sperren 19 ermöglicht wird, beispielsweise einzelne Akku-Schrauber 10 nur bei Bedarf und schrittweise hinsichtlich ihrer Funktion freizugeben. Hierdurch können Fehlbedienungen unterbunden werden.

Die Mittel zum Entsperren und/oder Sperren 19 können ein Bestandteil der Steuerungseinrichtung 14 sein, als Software und/oder Hardware vorliegen und über die Kommunikationseinrichtung 16 und den Sende- und Empfangseinheiten 17 mit den einzelnen Akku-Schrauber 10 kommunizieren. Beispielsweise deaktivieren die Mittel zum Entsperren und/oder Sperren 19 temporär einen der Akku-Schrauber 10, indem die Stromzufuhr zwischen einem Akkumulator und der Antriebseinheit des Akku-Schraubers 10 unterbrochen wird.

Um einen Montageablauf weiter zu vereinfachen, weist die Montageanlage 1 eine erste Bevorratungseinrichtung 20 und eine zweite Bevorratungseinrichtung 21 für Montageschrauben auf. Jede der Bevorratungseinrichtungen 20, 21 hat hier nicht näher gezeigte Schraubenschübe, in welchen unterschiedliche Schrauben gelagert sind. Oberhalb der Schraubenschübe bzw. oberhalb der Bevorratungseinrichtungen 20, 21 ist jeweils eine Pick-By-Light-Armatur 22 bzw. 23 angeordnet.

Mittels der Pick-By-Light-Armaturen 22 bzw. 23 können die jeweiligen Schraubenschübe angeleuchtet werden, in welchen diejenigen Schrauben bevorratet sind, welche in einem nächsten Montageschritt verbaut werden müssen.

Die Bevorratungseinrichtungen 20, 21 und die Pick-By-Light-Armaturen 22, 23 bilden jeweils eine Supporteinrichtung 24 (hier nur exemplarisch beziffert) für das erforderliche Montagematerial.

In Kombination mit der Möglichkeit die Werkzeuge 9 je nach Bedarf entsperren bzw. sperren zu können, ist die Montage an der vorliegenden Montageanlage 1 besonders betriebssicher gestaltet. Insbesondere eine solche Kombination bedeutet nämlich, dass für einen nächsten Montageschritt, beispielsweise einer einzelnen Schraube, ein Schraubenfach, in welchem sich genau diese Art von Schrauben befindet, angeleuchtet wird. Somit weiß ein Monteur schnell und zuverlässig, aus welchem Schraubenfach die Schraube für den nächsten Montageschritt zu entnehmen ist. Zugleich wird derjenige Akku-Schrauber 10 entsperrt, in welchem sich der geeignete Bit befindet und/oder welcher mit dem erforderlichen Drehmoment eingerichtet ist, um die Schraube ordnungsgemäß in einem hierfür vorgesehenen Gewindeloch an dem Werkstück 5 einzuschrauben.

Zusätzlich kann dieses Gewindeloch noch angeleuchtet werden, so dass auch der Montageort der Schraube eindeutig bestimmt ist.

All diese Informationen hierzu können auf dem RFID-Transponder 11 des Werkstückträgers 4 gespeichert sein, in welchem das Werkstück 5 angeliefert wird.

Darüber hinaus verfügt jeder der handgeführten, elektrisch betriebenen Werkzeuge 9 über eine Messeinrichtung zum Messen eines Drehmomentes (hier nicht dargestellt), mit welchem eine Schraube bei der Montage an einem Werkstück 5 angezogen wurde. Diesbezüglich ermittelte Angaben werden mit Mitteln 25 zum drahtlosen Übertragen von Anzugsdrehmomenten an die Steuereinrichtung 14 übermittelt und dort ausgewertet. Ist das Anzugsdrehmoment richtig eingestellt, wird die Freigabe IO, In Ordnung, ausgegeben und ein nächster Montageschritt kann erfolgen. Bei einem falschen Drehmoment wird eine Fehlermeldung NIO, Nicht In Ordnung, ausgegeben und die Schraube muss demontiert und durch eine neue Schraube ersetzt werden. Erst bei einem korrekten Drehmoment erfolgt ein nächster Montageschritt. Ist die Gesamtschraubenzahl abgearbeitet, ist der Montagevorgang an einem Werkstück 5 beendet und das Werkstück 5 kann mit seinem Werkstückträger 4 an dem Werkstückauslauf 8 der Montageanlage 1 entnommen werden.

Damit Akkumulatoren (hier nicht dargestellt) der Akku-Schrauber 10 schnell und unkompliziert mit elektrischer Energie aufgeladen werden können, steht an der Montageanlage 1 eine entsprechende Ladestation 26 mit vier Ladeschächten 27 (hier nur exemplarisch beziffert) zur Verfügung. Die Akkumulatoren können hierbei beispielsweise Informationen über die Anzahl der erfolgten Ladezyklen an die Ladestation 26 übermitteln. Hierdurch kann beispielsweise die Ausfallwahrscheinlichkeit eines jeden Akkumulators hinsichtlich seiner bereits erfolgten Ladezyklen berechnet werden. Insbesondere können entsprechende Informationen zur Speicherung auch an die Steuereinrichtung 14 übermittelt werden. Diese Informationen können auch an dem Bildschirm 15 angezeigt werden.

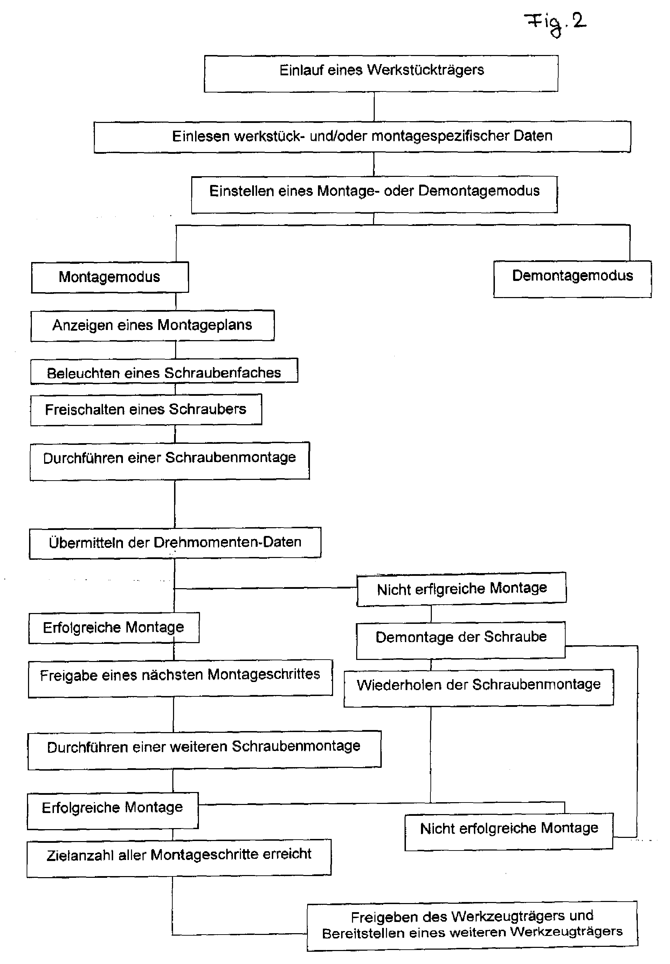

In der Figur 2 ist zusätzlich ein Flow-Chart zu einem möglichen Montagezyklus, wie er zuvor im Zusammenhang mit der Montageanlage 1 bereits erläutert wurde, nochmals dargestellt. Um Wiederholungen weitestgehend zu vermeiden wird dieser Montagezyklus nur kurz erläutert.

Der Montagezyklus beginnt hier mit dem Einlauf des Werkzeugträgers 4. Hierbei werden sogleich werkstück- bzw. montagespezifische Daten zu dem zu montierenden Werkstück 5 eingelesen. Auf Grundlage der eingelesenen Daten wird ein Montagemodus oder eine Demontagemodus eingestellt.

Dem Flow-Chart zufolge wird hier der Montagemodus eingestellt und weiter betrachtet. Der Montagemodus beginnt mit dem Anzeigen des Montageplans an einer geeigneten Anzeigeeinrichtung, wie etwa an dem vorstehend erläuterten Bildschirm 15.

Zusätzlich wird ein Schraubenfach mit den zu montierenden Schrauben beleuchtet und ein geeigneter Akku-Schrauber 10 zum Eindrehen einer Schraube aus dem beleuchteten Schraubenfach freigeschaltet.

Sodann kann die Montage der Schraube durch einen Monteur erfolgen, der die Schraube aus dem Schraubenfach ergreift, die Schraube mit der Hand in ein entsprechendes Gewindeloch eindreht und anschließend mit dem Akku-Schrauber 10 fest dreht.

Hierbei wird das Anzugsdrehmoment, mit welchem die Schraube fest gedreht wurde, ermittelt und an die Steuereinrichtung 14 der Montageanlage übermittelt. Ist das Drehmoment korrekt, wird der Montageschritt als erfolgreich abgeschlossen und ein nächster Montageschritt wird freigegeben. Anschließend werden die Schraubenmontagen so oft wiederholt, bis die Zielanzahl aller Montageschritte erreicht ist. Nun kann der Werkstückträger 4 mit dem erfolgreich montierten Werkstück 5 freigegeben und für eine weitere Verarbeitung bereitgestellt werden.

Erfolgt hingegen eine Schraubenmontage nicht erfolgreich, wird die Schraube wieder demontiert. Der anfangs fehlgeschlagene Montagevorgang wird dann mit einer neuen Schraube wiederholt, bis die Schraubenmontage als erfolgreich freigegeben wird.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Montageanlage
- 2: Gestell
- 3: Werkstücksupport
- 4: Werkstückträger
- 5: Werkstücke
- 6: Transportrichtung
- 7: Werkstückeinlauf
- 8: Werkstückauslauf
- 9: Werkzeuge
- 10: Akku-Schrauber
- 11: RFID-Transponder
- 12: dezentrale Speichereinrichtung
- 13: Leseeinrichtung
- 14: Steuereinrichtung
- 15: Bildschirm
- 16: drahtlose Kommunikationseinrichtung
- 17: Sende- und Empfangseinheiten
- 18: Schreibeinheit
- 19: Mittel zum Entsperren und/oder Sperren
- 20: erste Bevorratungseinrichtung
- 21: zweite Bevorratungseinrichtung
- 22: erste Pick-By-Light-Armatur
- 23: zweite Pick-By-Light-Armatur
- 24: Supporteinrichtung
- 25: Mitteln zum drahtlosen Übertragen von Anzugsdrehmomenten
- 26: Ladestation
- 27: Ladeschächte

## Patentansprüche

1. Montageanlage (1) mit einem Werkstückeinlauf (7), mit einem Werkstückauslauf (8) und mit handgeführten, elektrisch betriebenen Werkzeugen (9), mittels welcher eine Vielzahl an verschiedenen Montage- und/oder Demontagearten durchführbar ist,
**gekennzeichnet durch**
Mittel (19) zum Entsperren und/oder Sperren der handgeführten, elektrisch betriebenen Werkzeuge.

2. Montageanlage (1) nach Anspruch 1,
**dadurch gekennzeichnet, dass**
die handgeführten, elektrisch betriebenen Werkzeuge (9) einen Akku-Schrauber (10) umfassen.

3. Montageanlage (1) nach Anspruch 1 oder 2,
**gekennzeichnet durch**
eine drahtlose Kommunikationseinrichtung (16) für die Kommunikation zwischen den handgeführten, elektrisch betriebenen Werkzeugen (9) und einer Steuereinrichtung (14) der Montageanlage(1).

4. Montageanlage (1) nach einem der vorstehenden Ansprüche,
**gekennzeichnet durch**
Mittel (25) zum drahtlosen Übertragen von Anzugsdrehmomenten hinsichtlich einer erfolgten Schraubenmontage.

5. Montageanlage (1) nach einem der vorstehenden Ansprüche,
**gekennzeichnet durch**
mobile Werkstückträger (4) zum Bereitstellen von dezentralen Speichereinrichtungen (12).

6. Montageanlage (1) nach einem der vorstehenden Ansprüche,
**gekennzeichnet durch**
eine Anzeigeeinrichtung (15) zum Visualisieren eines Montage- und/oder Demontageplans.

7. Montageanlage (1) nach einem der vorstehenden Ansprüche,
**gekennzeichnet durch**
eine Supporteinrichtung (24) für Montagematerial, insbesondere für Schrauben.

8. Montageanlage (1) nach Anspruch 7,
**dadurch gekennzeichnet, dass**
die Supporteinrichtung (24) eine Pick-By-Light-Armatur (22, 23) für Montagematerialbehälter (20, 21) umfasst.

9. Montageanlage (1) nach einem der vorstehenden Ansprüche,
**gekennzeichnet durch**
eine Ladestation (26) für mehr als zwei, vorzugsweise vier, Akkumulatoren der handgeführten, elektrisch betriebenen Werkzeuge (9).

10. Verfahren zum Montieren und/oder Demontieren von Werkstücken (5) mit handgeführten, elektrisch betriebenen Werkzeugen (9), bei welchem Werkstücke (5) und/oder Werkstückträger (4) an einer Montageanlage (1) bereit gestellt werden,
**dadurch gekennzeichnet, dass**
beim Einlauf der Werkstücke (5) und/oder der Werkstückträger (4) in die Montageanlage (1) Montage- und/oder Demontageinformationen zu den Werkstücken (5) von dezentral anordenbaren Speichereinrichtungen (12) in eine Steuerungseinrichtung (14) eingelesen werden, anhand derer ein Montage- und/oder Demontageplan aufgerufen werden kann, mittels welcher die Steuereinrichtung (14) die Montageanlage (1) in einen Montagemodus oder Demontagemodus versetzt und mittels welcher an der Montageanlage (1) die handgeführten, elektrisch betriebenen Werkzeuge (9) hinsichtlich einer Verwendung entsperrt oder gesperrt werden.

11. Verfahren nach Anspruch 10,
**dadurch gekennzeichnet, dass**
die handgeführten, elektrisch betriebenen Werkzeuge (9) in einer Reihenfolge ihres Montage- oder Demontageeinsatzes entsperrt oder gesperrt werden.

12. Verfahren nach Anspruch 10 oder 11,
**dadurch gekennzeichnet, dass**
ein Montageort einer zu montierenden Schraube und/oder die zu montierende Schraube gekennzeichnet werden.

13. Verfahren nach Anspruch 10 bis 12,
**dadurch gekennzeichnet, dass**
nach einer erfolgten Montage oder Demontage entsprechende Arbeitsinformationen auf den dezentral anordenbaren Speichereinrichtungen (12) geschrieben und gespeichert werden.
